# EUROPEAN PATENT SPECIFICATION

(11) **EP 3 862 240 B1**
(45) Date of publication and mention of the grant of the patent: **15.05.2024**
(21) Application number: 21153702.2
(22) Date of filing: 27.01.2021
(51) Int. Cl.: B60W 30/16, B60W 50/02, G05D 1/00

(54) **VEHICLE CONTROL SYSTEM**
FAHRZEUGSTEUERUNGSSYSTEM
SYSTÈME DE COMMANDE DE VÉHICULE

(30) Priority: 05.02.2020 JP 2020018014
(43) Date of publication of application: 11.08.2021
(73) Proprietor: MAZDA MOTOR CORPORATION, Hiroshima 730-8670 (JP); NXP B.V., 5656 AG Eindhoven (NL)
(72) Inventor: ISHIBASHI, Masato, Hiroshima, 730-8670 (JP); TSUCHIYAMA, Kiyoyuki, Hiroshima, 730-8670 (JP); HAMANO, Daisuke, Hiroshima, 730-8670 (JP); FUTA, Tomotsugu, Hiroshima, 730-8670 (JP); HORIGOME, Daisuke, Hiroshima, 730-8670 (JP); TASAKI, Atsushi, Hiroshima, 730-8670 (JP); HASHIMOTO, Yosuke, Hiroshima, 730-8670 (JP); KIHARA, Yusuke, Hiroshima, 730-8670 (JP); HOJIN, Eiichi, Hiroshima, 730-8670 (JP); Van den Bossche, Arnaud, 5656 AG Eindhoven (NL); Marshal, Ray, 5656 AG Eindhoven (NL); Surico, Leonardo, 5656 AG Eindhoven (NL)
(74) Representative: von Tietzen und Hennig, Nikolaus

(56) References cited:
- EP-A1- 3 299 221
- WO-A1-2019/035458

## Description

### BACKGROUND

The technique disclosed herein relates to a vehicle control system.

The Japanese Unexamined Patent Publication No. H11-16099 discloses a vehicle traveling assist device. This vehicle traveling assist device includes: an infrared sensor, a radar, a superimposing unit, a determination unit, and an obstacle determination unit. The infrared sensor images an area outside the vehicle. The radar emits a radio wave toward the area imaged by the infrared sensor and receives a reflection wave from an object to detect a distance from the object and the direction toward the object. The superimposing unit superimposes information obtained by the infrared sensor and information obtained by the radar within an electronic circuit. The determination unit determines whether or not the object detected by the radar is a hot spot on the image obtained by the infrared sensor. The obstacle determination unit determines whether or not the hot spot is an obstacle on the traveling of a subject vehicle.

A control device performing driving control for a vehicle is also known from WO 2019/035458 A1. The device comprises as single compound eye camera capturing an image of surrounding scenery of the vehicle and recognizing the surrounding environment.

### SUMMARY

The device such as in Japanese Unexamined Patent Publication No. H11-16099 is provided with a plurality of cameras (the infrared sensor in Japanese Unexamined Patent Publication No. H11-16099) in order to monitor an environment spread around the vehicle (external environment of the vehicle). However, when a signal system including the cameras has an abnormality, it becomes difficult to continuously perform cruise control of the vehicle based on the output from the cameras. Document WO 2019/035458 A1 discloses a control device including: a control unit that performs driving control of a vehicle. The control unit temporarily continues automated traveling of the vehicle on a basis of a surrounding environment estimated by a remaining function of a compound eye camera, in a case where a malfunction of the compound eye camera used in recognition of the surrounding environment is detected during execution of automated driving control for the vehicle.

The technique disclosed herein has been made in view of this point, and an object thereof is to improve continuity of cruise control of the vehicle. This object is achieved by a vehicle control system according to claim 1.

The technique disclosed herein relates to a vehicle control system for controlling a vehicle. This vehicle control system includes: a plurality of first cameras disposed in the vehicle so as to surround the vehicle; a plurality of second cameras disposed in the vehicle so as to surround the vehicle; and a control unit that performs a first operation of outputting a control signal for cruise control of the vehicle based on both outputs from the plurality of the first cameras and outputs from the plurality of the second cameras, a second operation of outputting the control signal based on the outputs from the plurality of the first cameras, and a third operation of outputting the control signal based on the outputs from the plurality of the second cameras.

This configuration includes two combinations of cameras provided in the vehicle so as to surround the vehicle. Provision of the first cameras so as to surround the vehicle allows an environment spread around the vehicle (the external environment of the vehicle ) to be monitored based on the output from the first cameras. Similarly, provision of the second cameras so as to surround the vehicle allows the external environment of the vehicle to be monitored based on the output from the second cameras. As described above, the external environment of the vehicle may be monitored based on at least either one of the output from the first cameras or the output from the second cameras. Accordingly, even when either one of the first signal system including the first cameras or the second signal system including the second cameras has an abnormality, it is possible to continue the cruise control of the vehicle based on the output from the cameras in the other signal system by performing the second or third operation. This allows improvement in continuity of cruise control of the vehicle.

In the vehicle control system, the control unit may be configured to perform the first operation when a first signal system including the plurality of first cameras and a second signal system including the plurality of second cameras both do not have an abnormality, the second operation when the second signal system between the first and second signal systems has an abnormality, and the third operation when the first signal system between the first and second signal systems has an abnormality.

This configuration allows automatic switching among the first, second, and third operations according to the presence or absence of abnormality in the first and second signal systems. Accordingly, when either one of the first or second signal system has an abnormality, the second or third operation may be automatically performed. This allows automatic continuation of the cruise control of the vehicle.

In the vehicle control system according to the invention, the plurality of first cameras includes a first front camera that images an area in front of the vehicle, a first diagonally backward right camera that images an area diagonally backward right of the vehicle, and a first diagonally backward left camera that images an area diagonally backward left of the vehicle. The plurality of second cameras includes a second front camera that images an area in front of the vehicle, a second diagonally backward right camera that images an area diagonally backward right of the vehicle, and a second diagonally backward left camera that images an area diagonally backward left of the vehicle.

This configuration allows continuous cruise control of the vehicle based on at least an area in front of the vehicle, an area diagonally backward right of the vehicle, and an area diagonally backward left of the vehicle in the environment spread around the vehicle (external environment of the vehicle). Accordingly, even when either one of the first or second signal system has an abnormality, this allows continuous cruise control based on the area in front of the vehicle (e.g., control for maintaining an appropriate distance from other vehicles traveling in front of the subject vehicle) and a control based on the area diagonally backward right of the vehicle and the area diagonally backward left of the vehicle (e.g., control for sensing critical situations when the subject vehicle performs lane changing).

In the vehicle control system according to the invention, the control unit includes: a first recognition processing IC unit that performs recognition processing for recognizing an external environment of the vehicle based on an output from the plurality of first cameras; and a second recognition processing IC unit that performs the recognition processing based on the output of the plurality of second cameras. The control unit may be configured to output, during the first operation, the control signal based on both of a result of the recognition processing by the first recognition processing IC unit and a result of the recognition processing by the second recognition processing IC unit, to output, during the second operation, the control signal based on the result of the recognition processing by the first recognition processing IC unit, and to output, during the third operation, the control signal based on the result of the recognition processing by the second recognition processing IC unit.

This configuration allows improvement of recognition accuracy of the recognition processing by both of the first and second recognition processing IC units, compared with the recognition accuracy of the recognition processing by either one of the first or second recognition processing IC unit.

### BRIEF DESCRIPTION OF THE DRAWINGS

FIG. 1 is a plan view illustrating a vehicle including a vehicle control system according to an embodiment.
FIG. 2 is a plan view illustrating monitoring areas of cameras and radars.
FIG. 3 is a plan view illustrating monitoring areas of first cameras and first radars.
FIG. 4 is a plan view illustrating monitoring areas of second camera and second radars.
FIG. 5 is a block diagram illustrating a configuration of the vehicle control system according to an embodiment.
FIG. 6 is a block diagram illustrating a functional configuration of the vehicle control system.
FIG. 7 is a block diagram illustrating a functional configuration of the vehicle control system.
FIG. 8 is a block diagram illustrating the configuration of the vehicle control system according to a variation of the embodiment.

### DETAILED DESCRIPTION

Embodiments will be described in detail below with reference to the drawings. In the drawings, the same or equivalent parts are denoted by the same reference numerals, and a description thereof is not repeated.

### (Embodiment)

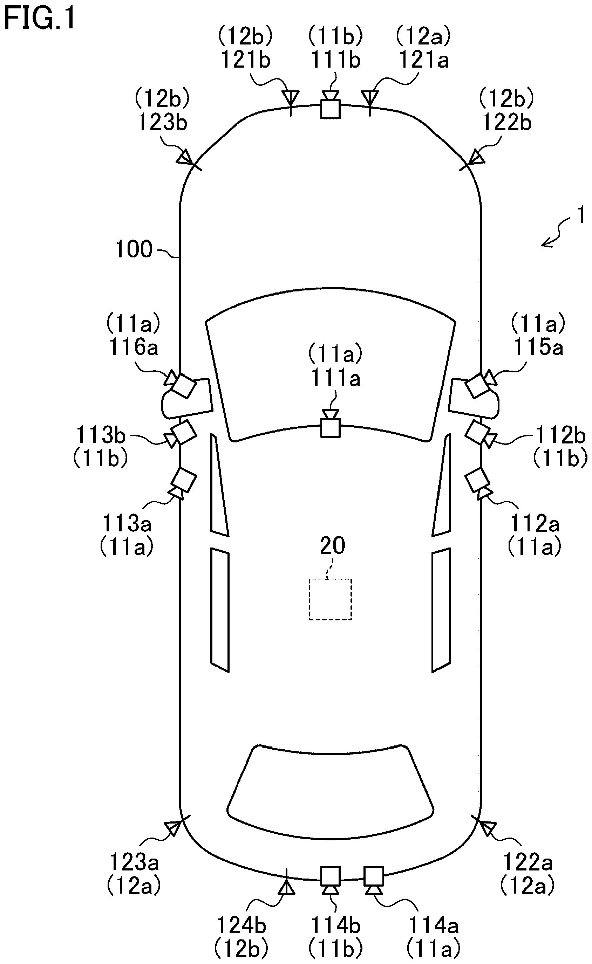

FIG. 1 illustrates an appearance of a vehicle 100 including a vehicle control system 1 according to an embodiment. The vehicle control system 1 is provided in the vehicle 100 (specifically, a four-wheeled vehicle). The vehicle 100 can switch among manual driving, assisted driving, and self-driving. The manual driving is driving to travel in accordance with driver's operation (e.g., an accelerator operation and the like). The assisted driving is driving to travel with assistance of the driver's operation. The self-driving is driving to travel without the driver's operation. The vehicle control system 1 controls the vehicle 100 during the assisted driving and the self-driving. Specifically, the vehicle control system 1 controls an actuator (not shown) provided in the vehicle 100 to control the motion (specifically, traveling) of the vehicle 100. In the following description, the vehicle 100 provided with the vehicle control system 1 is referred to as "the subject vehicle," whereas another vehicle present around the subject vehicle is referred to as "another vehicle (other vehicles)."

### [Actuator]

The actuator provided in the vehicle 100 includes a drive actuator, a steering actuator, a braking actuator, and the like. Examples of the drive actuator include an engine, a motor, and a transmission. Examples of the steering actuator include steering. Examples of the braking actuator include a brake.

### [Configuration of Vehicle Control System]

The vehicle control system 1 includes an information acquisition unit 10 and a control unit 20. The control unit 20 is housed in a single housing installed in a specific position within the vehicle 100 such as a lower part of a passenger's seat or a trunk, for example.

### [Information Acquisition Unit]

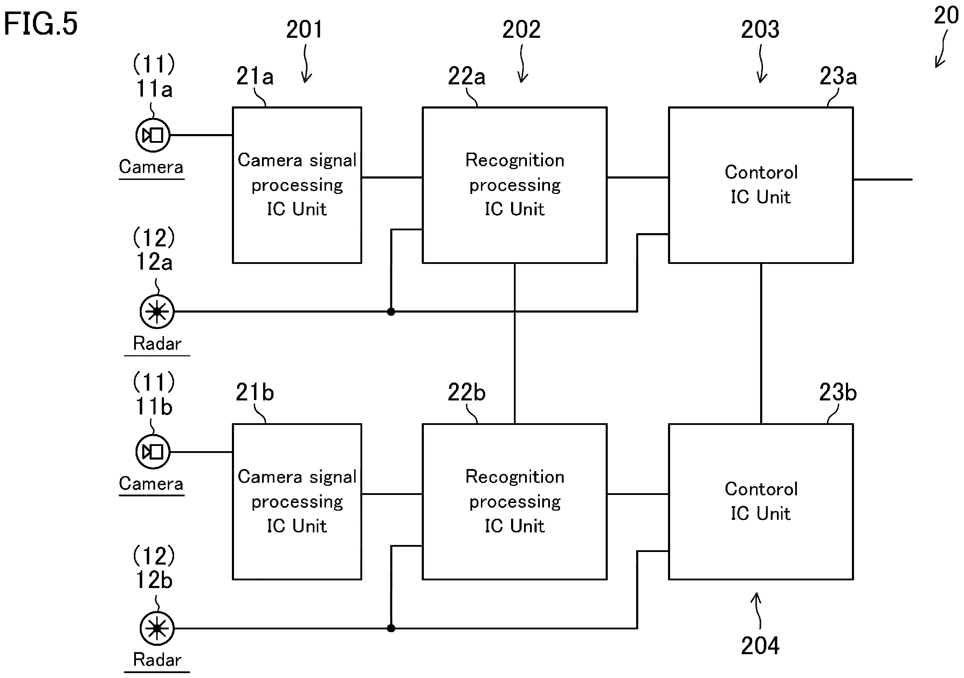

The information acquisition unit 10 acquires various kinds of information for use in control (specifically, cruise control) of the vehicle 100. As illustrated in FIGS. 1, 5, and 6, the information acquisition unit 10 includes a plurality of cameras 11, a plurality of radars 12, a position sensor 13, an external input unit 14, mechanical sensors 15, and a driver input unit 16. FIGS. 1 and 5 omit illustration of the position sensor 13, the external input unit 14, the mechanical sensors 15, and the driver input unit 16.

### [Camera]

The cameras 11 have the same configuration. The cameras 11 are provided in the vehicle 100 so as to surround the vehicle 100. Each of the cameras 11 images part of an environment spread around the vehicle 100 (an external environment of the vehicle 100) to acquire image data indicating part of the external environment of the vehicle 100. The image data obtained by each of the cameras 11 is transmitted to the control unit 20.

In this example, the cameras 11 are each a monocular camera having a wide-angle lens. The cameras 11 are each constituted using a solid imaging element such as a charge coupled device (CCD) and a complementary metal-oxide-semiconductor (CMOS), for example. The cameras 11 may each be a monocular camera having a narrow-angle lens or a stereo camera having wide-angle lenses or narrow-angle lenses.

The cameras 11 include a plurality of first cameras 11a and a plurality of second cameras 11b. This vehicle 100 has two combinations of the cameras 11 provided in the vehicle 100 so as to surround the vehicle 100.

### <First Camera>

The first cameras 11a are provided in the vehicle 100 so as to surround the vehicle 100. Specifically, the first cameras 11a are provided in the vehicle such that imaging areas of the first cameras 11a surround the vehicle 100. In this example, the first cameras 11a include a first front camera 111a, a first diagonally backward right camera 112a, a first diagonally backward left camera 113 a, and a first back camera 114a. The first front camera 111a images an area in front of the vehicle 100. The first diagonally backward right camera 112a images an area diagonally backward right of the vehicle 100. The first diagonally backward left camera 113a images an area diagonally backward left of the vehicle 100. The first back camera 114a images an area behind the vehicle 100.

### <Second Camera>

The second cameras 11b are provided in the vehicle 100 so as to surround the vehicle 100. Specifically, the second cameras 11b are provided in the vehicle such that imaging areas of the second cameras 11b surround the vehicle 100. In this example, the second cameras 11b include a second front camera 11 1b, a second diagonally backward right camera 112b, a second diagonally backward left camera 113b, and a second back camera 114b. The second front camera 111b images an area in front of the vehicle 100. The second diagonally backward right camera 112b images an area diagonally backward right of the vehicle 100. The second diagonally backward left camera 113b images an area diagonally backward right of the vehicle 100. The second back camera 114b images an area behind the vehicle 100.

### [Radar]

The radars 12 have the same configuration. The radars 12 are provided in the vehicle 100 so as to surround the vehicle 100. Each of the radars 12 detects part of the external environment of the vehicle 100. Specifically, the radars 12 each transmit radio waves toward part of the external environment of the vehicle 100 and receive reflected waves from the part of the external environment of the vehicle 100 to detect the part of the external environment of the vehicle 100. Detection results of the radars 12 are transmitted to the control unit 20.

The radars 12 may each be a millimeter-wave radar that transmits millimeter waves, a lidar (light detection and ranging) that transmits laser light, an infrared radar that transmits infrared rays, or an ultrasonic radar that transmits ultrasonic waves, for example.

The radars 12 include a plurality of first radars 12a and a plurality of second radars 12b. This vehicle 100 has two combinations of the radars 12 provided in the vehicle 100 so as to surround the vehicle 100.

### <First Radar>

The first radars 12a are provided in the vehicle 100 so as to surround the vehicle 100. Specifically, the first radars 12a are provided in the vehicle such that detection areas of the first radars 12a surround the vehicle 100. In this example, the first radars 12a include a first front radar 121a, a first diagonally backward right radar 122a, and a first diagonally backward left radar 123a. The first front radar 121a detects the external environment in front of the vehicle 100. The first diagonally backward right radar 122a detects the external environment diagonally backward right of the vehicle 100. The first diagonally backward left radar 123a detects the external environment diagonally backward left of the vehicle 100.

### <Second Radar>

The second radars 12b are provided in the vehicle 100 so as to surround the vehicle 100. Specifically, the second radars 12b are provided in the vehicle 100 such that detection areas of the second radars 12b surround the vehicle 100. In this example, the second radars 12b include a second front radar 121b, a second diagonally backward right radar 122b, a second diagonally backward left radar 123b, and a second back radar 124b. The second front radar 121b detects the external environment in front of the vehicle 100. The second diagonally backward right radar 122b detects the external environment diagonally backward right of the vehicle 100. The second diagonally backward left radar 123b detects the external environment diagonally backward left of the vehicle 100. The second back radar 124b detects the external environment behind the vehicle 100.

### [Relationship between Camera and Radar]

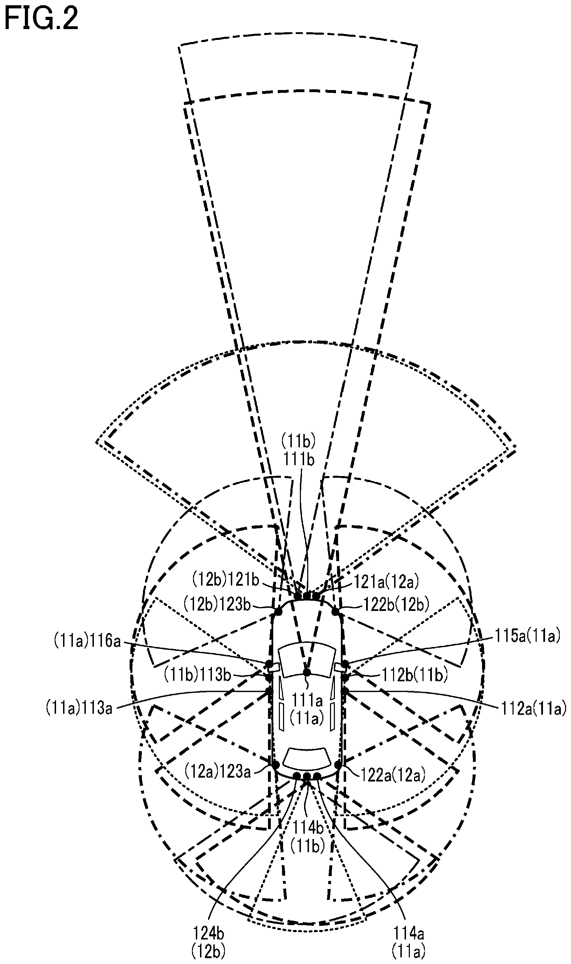

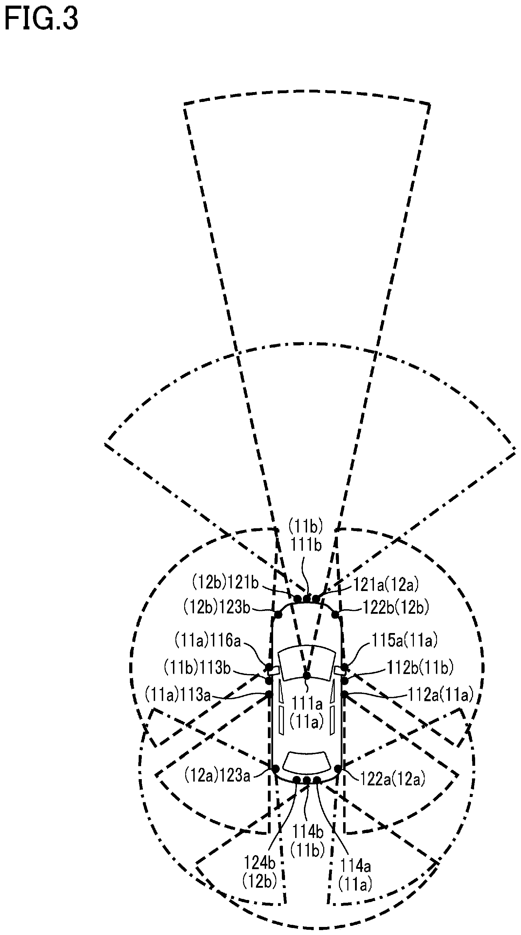

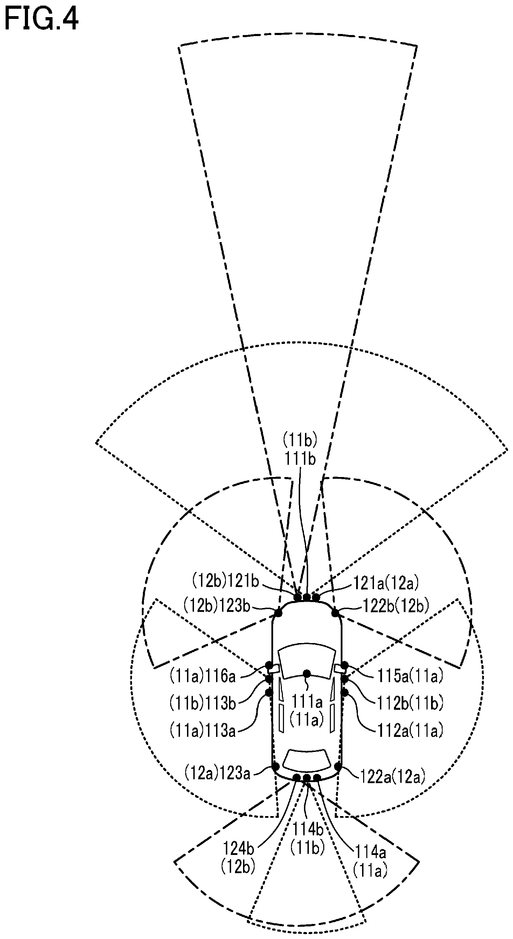

FIG. 2 illustrates imaging areas (monitoring areas) of the cameras 11 and detection areas (monitoring areas) of the radars 12. FIG. 3 illustrates imaging areas of the first cameras 11a and detection areas of the first radars 12a. FIG. 4 illustrates imaging areas of second cameras 11b and detection areas of the second radars 12b. In FIGS. 2 to 4, each thicker broken line indicates an imaging area of each of the first cameras 11a, and each thicker dot-and-dash line indicates a detection area of each of the first radars 12a. Each thinner broken line indicates an imaging area of each of the second cameras 11b, and a thinner dot-and-dash line indicates a detection area of each of the second radars 12b.

As illustrated in FIG. 3, in this example, each monitoring area and each arrangement of the first cameras 11a and the first radars 12a are set such that a combination of their monitoring areas surrounds the entire circumference of the vehicle 100. Similarly, as illustrated in FIG. 4, each monitoring area and each arrangement of the second cameras 11b and the second radars 12b are set such that a combination of their monitoring areas surrounds the entire circumference of the vehicle 100.

### [Position Sensor]

The position sensor 13 detects the position (e.g., the latitude and the longitude) of the vehicle 100. The position sensor 13 receives GPS information from the Global Positioning System and detects the position of the vehicle 100 based on the GPS information, for example. The information (the position of the vehicle 100) obtained by the position sensor 13 is transmitted to the control unit 20.

### [External Input Unit]

The external input unit 14 receives information through an extra-vehicle network (e.g., the Internet and the like) provided outside the vehicle 100. The external input unit 14 receives communication information from another vehicle (not shown) positioned around the vehicle 100, car navigation data from a navigation system (not shown), traffic information, high-precision map information, and the like, for example. The information obtained by the external input unit 14 is transmitted to the control unit 20.

### [Mechanical Sensor]

The mechanical sensors 15 detect the status (e.g., the speed, the acceleration, the yaw rate, and the like) of the vehicle 100. The mechanical sensors 15 include a vehicle speed sensor that detects the speed of the vehicle 100, an acceleration sensor that detects the acceleration of the vehicle 100, a yaw rate sensor that detects the yaw rate of the vehicle 100, and the like, for example. The information (the status of the vehicle 100) obtained by the mechanical sensors 15 is transmitted to the control unit 20.

### [Driver Input Unit]

The driver input unit 16 detects driving operations applied to the vehicle 100. The driver input unit 16 includes an accelerator position sensor, a steering angle sensor, a brake hydraulic pressure sensor, and the like, for example. The accelerator position sensor detects an accelerator operation amount of the vehicle 100. The steering angle sensor detects a steering angle of a steering wheel of the vehicle 100. The brake hydraulic pressure sensor detects a brake operation amount of the vehicle 100. The information (the driving operation of the vehicle 100) obtained by the driver input unit 16 is transmitted to the control unit 20.

### [Control Unit]

FIG. 5 illustrates a configuration of the control unit 20. In this example, the control unit 20 includes a first signal processing IC unit 21a, a second signal processing IC unit 21b, a first recognition processing IC unit 22a, a second recognition processing IC unit 22b, a first control IC unit 23a, and a second control IC unit 23b. Each of these IC units may include a single integrated circuit (IC) or a plurality of ICs. The IC may house a single core or die or house a plurality of cores or dies cooperating with each other. The core or die may include a CPU (processor) and a memory storing therein a program for operating the CPU and information such as processing results by the CPU, for example.

In this example, the first signal processing IC unit 21a and the second signal processing IC unit 21b constitute a signal processing unit 201. The first recognition processing IC unit 22a and the second recognition processing IC unit 22b constitute a recognition processing unit 202. The first control IC unit 23a constitutes a determination processing unit 203. The second control IC unit 23b constitutes a backup processing unit 204.

### <Signal Processing Unit>

The signal processing unit 201 performs image processing with respect to the output from the cameras 11. The signal processing unit 201 outputs image data obtained by the image processing. Specifically, the first signal processing IC unit 21a performs image processing with respect to the output from the first cameras 11a. The second signal processing IC unit 21b performs image processing with respect to the output from the second cameras 11b.

### <Recognition Processing Unit>

The recognition processing unit 202 performs recognition processing for recognizing the external environment of the vehicle 100 based on the output (the image data) from the signal processing unit 201. The recognition processing unit 202 outputs external environment data obtained by the recognition processing. Specifically, the first recognition processing IC unit 22a performs recognition processing based on the output which has been processed by the first signal processing IC unit 21a and output from the first cameras 11a. The second recognition processing IC unit 22b performs recognition processing based on the output which has been processed by the second signal processing IC unit 21b and output from the second cameras 11b.

### <Determination Processing Unit>

The determination processing unit 203 performs determination processing for cruise control of the vehicle 100 based on the output (the external environment data) from the recognition processing unit 202. Specifically, the first control IC unit 23a performs determination processing based on the output from the first recognition processing IC unit 22a and/or the output from the second recognition processing IC unit 22b. The determination processing unit 203 then outputs a control signal for cruise control of the vehicle 100 based on a result of the determination processing.

### <Backup Processing Unit>

The backup processing unit 204 performs recognition processing for recognizing the external environment of the vehicle 100 based on the output (the image data) from the signal processing unit 201. Specifically, the second control IC unit 23b performs recognition processing based on the output from the first signal processing IC unit 21a and/or the output from the second signal processing IC unit 21b. The backup processing unit 204 performs determination processing for cruise control of the vehicle 100 based on a result of the recognition processing. The backup processing unit 204 then outputs a control signal for cruise control of the vehicle 100 based on the result of the determination processing.

### [Function of Vehicle Control System]

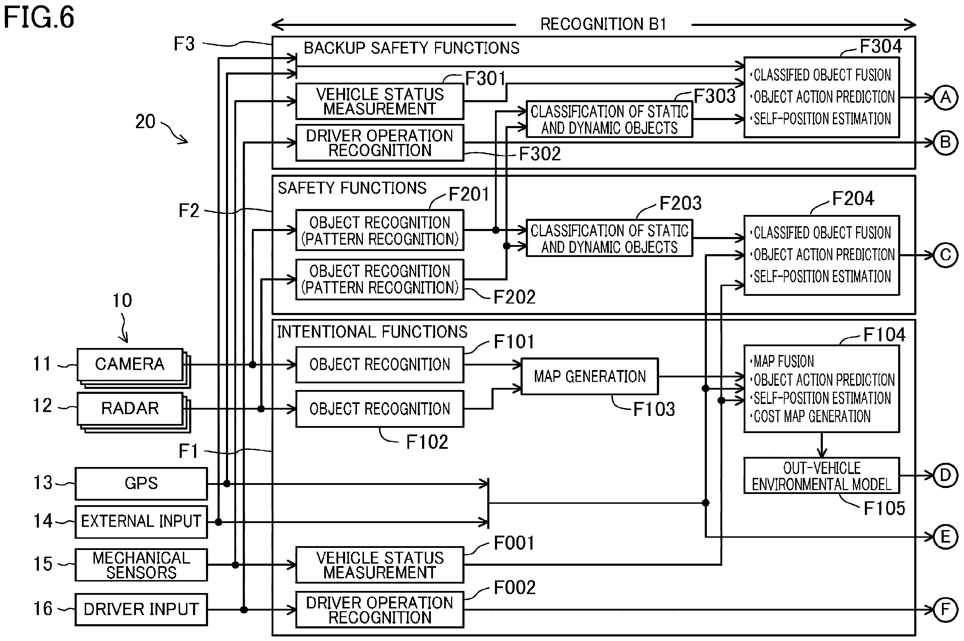

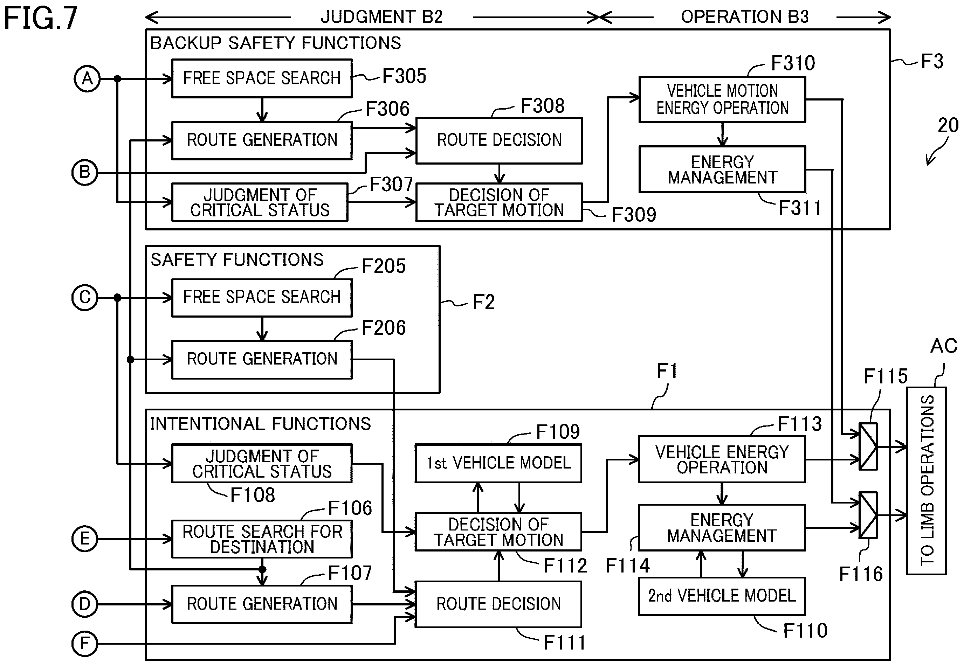

The following describes a functional configuration of the vehicle control system 1 with reference to FIGS. 6 and 7. The function of the vehicle control system 1 is broadly divided into a recognition block B1, a determination block B2, and an operation block B3. The recognition block B1 recognizes the external environment of the vehicle 100 based on the various kinds of information acquired by the information acquisition unit 10. The recognition block B1 may be configured to recognize an internal environment of the vehicle 100. The determination block B2 determines a status and condition of the vehicle 100 based on a recognition result of the recognition block B1 and determines a target operation of the vehicle 100 based on a result of the determination. The operation block B3 generates a signal for controlling the actuator AC provided in the vehicle 100 based on the target operation of the vehicle 100 determined by the determination block B2 and outputs the signal to the actuator AC.

In this example, the vehicle control system 1 includes a main arithmetic unit F1, a safety functional unit F2, and a backup functional unit F3.

### <Main Arithmetic Unit>

The main arithmetic unit F1 recognizes the external environment of the vehicle 100 based on the output from the information acquisition unit 10 and determines a target route of the vehicle 100 based on the external environment of the vehicle 100. The main arithmetic unit F1 determines a target motion of the vehicle 100 based on the target route of the vehicle 100 and outputs a control signal based on the target motion of the vehicle 100. For the processing by the main arithmetic unit F1, a learning model generated by deep learning is used. In the deep learning, a multilayered neural network (deep neural network) is used. Examples of the multilayered neural network include Convolutional Neural Network (CNN).

In this example, the main arithmetic unit F1 includes a vehicle status detection unit F001, a driver operation recognition unit F002, an object recognition unit F101 (an image system), an object recognition unit F102 (a radar system), a map generation unit F103, an external environment estimation unit F104, an external environment model F105, a route search unit F106, a route generation unit F107, a critical status determination unit F108, a first vehicle model F109, a second vehicle model F110, a route determination unit F111, a target motion determination unit F112, a vehicle motion energy setting unit F113, an energy management unit F114, a selector F115, and a selector F116.

The vehicle status detection unit F001, the driver operation recognition unit F002, the object recognition unit F101, the object recognition unit F102, the map generation unit F103, the external environment estimation unit F104, and the external environment model F105 belong to the recognition block B1. The route search unit F106, the route generation unit F107, the critical status determination unit F108, the first vehicle model F109, the route determination unit F111, and the target motion determination unit F112 belong to the determination block B2. The second vehicle model F110, the vehicle motion energy setting unit F113, the energy management unit F114, the selector F115, and the selector F116 belong to the operation block B3.

In this example, the signal processing unit 201 includes part of the object recognition unit F101 (the image system), while the recognition processing unit 202 includes the rest thereof. The recognition processing unit 202 includes the object recognition unit F102 (the radar system) and the map generation unit F103. The recognition processing unit 202 (specifically, the first recognition processing IC unit 22a) includes the external environment estimation unit F104, the external environment model F105, the route search unit F106, the route generation unit F107, the first vehicle model F109, and the second vehicle model F110. The determination processing unit 203 (specifically, the first control IC unit 23a) includes the vehicle status detection unit F001, the driver operation recognition unit F002, the critical status determination unit F108, the route determination unit F111, the target motion determination unit F112, the vehicle motion energy setting unit F113, the energy management unit F114, the selector F115, and the selector F116.

### <<Vehicle Status Detection Unit>>

The vehicle status detection unit F001 recognizes the status of the vehicle 100 (e.g., speed, acceleration, yaw rate, and the like) based on the output from the mechanical sensors 15.

### <<Driver Operation Recognition Unit>>

The driver operation recognition unit F002 recognizes the driving operations applied to the vehicle 100 based on the output from the driver input unit 16.

### <<Object Recognition Unit (Image System)>>

The object recognition unit F101 recognizes an object included in the external environment of the vehicle 100 based on the output from the cameras 11. Thus, information on the object (object information) is obtained. The object information indicates the type of the object, the shape of the object, and the like, for example. Examples of the object include a dynamic object that moves with the lapse of time and a stationary object that does not move with the lapse of time. Examples of the dynamic object include four-wheeled vehicles, motorcycles, bicycles, pedestrians, and the like. Examples of the stationary object include signs, roadside trees, median strips, center poles, buildings, and the like.

Specifically, the object recognition unit F101 includes an image processing unit and an image recognition unit. The image processing unit performs image processing with respect to the image data which is the output from the cameras 11. This image processing includes distortion correction processing for correcting the distortion of an image presented in the image data, white balance adjustment processing for adjusting the brightness of the image presented in the image data, and the like. The image recognition unit recognizes the object included in the external environment of the vehicle 100 based on the image data processed by the image processing unit. For object recognition processing by the image recognition unit of the object recognition unit F101, a known object recognition technique (an image data-based object recognition technique) may be used, for example. The image recognition unit of the object recognition unit F101 may be configured to perform the object recognition processing using a learning model generated by deep learning.

In this example, the image processing unit of the object recognition unit F101 includes a first image processing unit that performs processing based on an output from the first cameras 11a and a second image processing unit that performs processing based on an output from the second cameras 11b. The image recognition unit of the object recognition unit F101 includes a first image recognition unit that performs processing based on an output from the first image processing unit and a second image recognition unit that performs processing based on an output from the second image processing unit. In this example, the signal processing unit 201 includes the image processing unit of the object recognition unit F101, while the recognition processing unit 202 includes the image recognition unit of the object recognition unit F101. Specifically, the first signal processing IC unit 21a includes the first image processing unit, and the second signal processing IC unit 21b includes the second image processing unit. The first recognition processing IC unit 22a includes the first image recognition unit, and the second recognition processing IC unit 22b includes the second image recognition unit.

### <<Object Recognition Unit (Radar System)>>

The object recognition unit F102 recognizes the object included in the external environment of the vehicle 100 based on a detection result which is the output from the radars 12 (e.g., a peak list of the reflected waves). Thus, the object information is obtained. Specifically, the object recognition unit F102 performs analysis processing (processing for obtaining the object information) on the detection result of the radars 12. For the object recognition processing by the object recognition unit F102, a known object recognition technique (an object recognition technique based on the detection result of the radars 12) may be used, for example. The obj ect recognition unit F102 may be configured to perform the obj ect recognition processing using a learning model generated by deep learning.

In this example, the object recognition unit F102 includes a first radar recognition unit that performs processing based on an output from the first radars 12a and a second radar recognition unit that performs processing based on an output from the second radars 12b. In this example, the first recognition processing IC unit 22a includes the first radar recognition unit, and the second recognition processing IC unit 22b includes the second radar recognition unit.

### <<Map Generation Unit>>

The map generation unit F103 generates map data (e.g., three-dimensional map data) indicating the external environment of the vehicle 100 based on an output from the object recognition unit F101 (image system) and an output from the obj ect recognition unit F 102 (radar system). The map generation unit F103 generates the map data for each of a plurality of areas (e.g., four areas of front, rear, right, and left) obtained by dividing a surrounding area surrounding the vehicle 100, for example. In response to the input of the object information obtained by each of the object recognition unit F101 (the image system) and the object recognition unit F102 (the radar system) to the map generation unit F103, the map generation unit F 103 fuses the pieces of object information, and reflects the object information obtained by the fusion in the map data.

In this example, the map generation unit F103 includes a first map generation unit that performs processing based on an output from the first image recognition unit of the object recognition unit F101 and an output from the first radar recognition unit of the object recognition unit F102 and a second map generation unit that performs processing based on an output from the second image recognition unit of the object recognition unit F101 and an output from the second radar recognition unit of the object recognition unit F102. In this example, the first recognition processing IC unit 22a includes the first map generation unit, and the second recognition processing IC unit 22b includes the second map generation unit.

### <<External Environment Estimation Unit>>

The external environment estimation unit F 104 estimates the external environment of the vehicle 100 based on an output from the vehicle status detection unit F001, an output from the map generation unit F103, an output from the position sensor 13, and an output from the external input unit 14 (e.g., high-precision map information). Specifically, the external environment estimation unit F104 generates the three-dimensional map data indicating the external environment of the vehicle 100 by image recognition processing based on the external environment model F105.

In this example, the external environment estimation unit F104 performs the following operation. First, the external environment estimation unit F104 fuses map data for each of a plurality of areas (e.g., four areas of front, rear, right, and left) to generate fused map data indicating the surroundings (the external environment) of the vehicle 100. Next, for each of dynamic objects included in the fused map data, the external environment estimation unit F104 predicts changes in the distance, direction, and relative speed between the dynamic object and the subject vehicle. The external environment estimation unit F104 then incorporates a result of the prediction into the external environment model F105. Further, the external environment estimation unit F104 estimates the position of the subject vehicle in the fused map data and calculates a route cost based on the output from the position sensor 13 (the position of the vehicle 100), the output from the external input unit 14 (the high-precision map information), and the output from the vehicle status detection unit F001 (e.g., vehicle speed information, six degrees of freedom (6DoF) information, and the like). The external environment estimation unit F104 incorporates a result of the estimation and a result of the calculation together with information on the subject vehicle acquired by various kinds of sensors into the external environment model F105. With the foregoing processing, the external environment model F105 is updated at any time.

### <<External Environment Model>>

The external environment model F105 indicates the external environment of the vehicle 100. The external environment model F105 is a learning model generated by deep learning.

### <<Route Search Unit>>

The route search unit F106 searches for a wide-area route of the vehicle 100 based on the output from the position sensor 13 and the output from the external input unit 14 (e.g., car navigation data).

### <<Route Generation Unit>>

The route generation unit F107 generates a travel route of the vehicle 100 based on an output from the external environment model F105 and an output from the route search unit F106. To the travel route generated by the route generation unit F107, a score of the safety, the fuel consumption, or the like of the vehicle 100 in the travel route is added, for example. Higher safety of the vehicle 100 in the travel route gives a lower score of the travel route. Lower fuel consumption of the vehicle 100 in the travel route gives a lower score of the travel route. The route generation unit F107 generates at least one travel route giving a relatively low (e.g., the lowest) score.

The route generation unit F107 may generate a plurality of travel routes based on a plurality of viewpoints. The route generation unit F107 may be configured to receive the output from the driver input unit 16 and adjust the travel route in accordance with the output from the driver input unit 16, for example. Thus, a travel route with a relatively low score and a travel route adjusted in accordance with the output from the driver input unit 16 are generated, for example.

### <<Critical Status Determination Unit>>

The critical status determination unit F108 determines whether the vehicle 100 is in a critical status based on an output from a preprocessing unit F204 of the safety functional unit F2 (the position of the subject vehicle relative to the object included in the external environment of the vehicle 100). Examples of the critical status of the vehicle 100 include a status in which vehicle 100 may collide with the object, a status in which the vehicle 100 may go out of a lane, and the like. The critical status determination unit F108 may determine whether the vehicle 100 is in the critical status based on the external environment model F 105. When determining that the vehicle 100 is in the critical status, the critical status determination unit F108 generates a target route for avoiding the critical situations.

### <<First Vehicle Model>>

The first vehicle model F109 is a 6DoF vehicle model indicating the motion on six axes of the vehicle 100. The 6DoF vehicle model is obtained by modeling acceleration along three axes, namely, in the "forward/backward (surge)", "left/right (sway)", and "up/down (heave)" directions of the traveling vehicle 100, and the angular velocity along the three axes, namely, "pitch", "roll", and "yaw." That is, the first vehicle model F109 is a numerical model not grasping the motion of the vehicle 100 only on the plane (the forward/backward and left/right directions (i.e., the movement along the X-Y plane) and the yawing (along the Z-axis)) according to the classical vehicle motion engineering, but reproducing the behavior of the vehicle 100 using six axes in total. The six axes further include the pitching (along the Y-axis), rolling (along the X-axis) and the movement along the Z-axis (i.e., the up/down motion) of the vehicle body mounted on the four wheels with the suspension interposed therebetween. The first vehicle model F109 is generated based on the basic motion function of the vehicle 100 set in advance, the external environment of the vehicle 100, and the like. The first vehicle model F109 is updated as appropriate in accordance with changes in the external environment of the vehicle 100 and the like. The first vehicle model F109 is a learning model generated by deep learning, for example.

### <<Second Vehicle Model>>

The second vehicle model F110 indicates the energy consumption of the vehicle. Specifically, the second vehicle model F110 indicates cost (fuel consumption or electricity consumption) for the operation of the actuator AC of the vehicle 100. The second vehicle model F110 is obtained by modeling the opening/closing timing of intake/exhaust valves (not shown), the timing of injectors (not shown) injecting the fuel, the opening/closing timing of the valves for the exhaust gas recirculation system, and the like, for example, at the most improved fuel consumption in outputting a predetermined amount of the engine torque. The second vehicle model F110 is generated during the travel of the vehicle, and is updated as appropriate. The second vehicle model F110 is a learning model generated by deep learning, for example.

### <<Route Determination Unit>>

The route determination unit F111 determines the target route of the vehicle 100 based on an output from the driver operation recognition unit F002, an output from the route generation unit F107, and an output from a route generation unit F206 of the safety functional unit F2. Specifically, the route determination unit F111 selects either the travel route generated by the route generation unit F107 or a travel route generated by the route generation unit F206 of the safety functional unit F2 as the target route. The route determination unit F111 may adjust the selected target route in accordance with the output from the driver operation recognition unit F002.

The route determination unit F111 may preferentially select the travel route generated by the route generation unit F107 during normal traveling as the target route, for example. The route determination unit F111 may select the travel route generated by the route generation unit F206 of the safety functional unit F2 as the target route when the travel route generated by the route generation unit F107 does not pass through free space searched for by a free space search unit F205 of the safety functional unit F2.

### <<Target Motion Determination Unit>>

The target motion determination unit F112 determines the target motion of the vehicle 100 based on an output from the critical status determination unit F108, the first vehicle model F109, and an output from the route determination unit F111 The target motion determination unit F112 may, upon input of the target route generated by the critical status determination unit F108 (the target route for avoiding critical situations), determine the target motion of the vehicle 100 based on the target route generated by the critical status determination unit F108 and the first vehicle model F109, for example. The target motion determination unit F112 may, when the target route generated by the critical status determination unit F108 is not input (the vehicle 100 is not in a critical status), determine the target motion of the vehicle 100 based on the target route generated by the route determination unit F111 and the first vehicle model F109.

### <<Vehicle Motion Energy Setting Unit>>

The vehicle motion energy setting unit F113 calculates driving torque required for the drive actuator, steering torque required for the steering actuator, and braking torque required for the braking actuator based on an output from the target motion determination unit F112. Specifically, the vehicle motion energy setting unit F113 calculates the driving torque, the steering torque, and the braking torque such that the motion of the vehicle 100 becomes the target motion determined by the target motion determination unit F112.

### <<Energy Management Unit>>

The energy management unit F114 calculates a control amount of the actuator AC based on the second vehicle model F110 and an output from the vehicle motion energy setting unit F113. Specifically, the energy management unit F114 calculates the control amount of the actuator AC based on the second vehicle model F110 at the highest energy efficiency to achieve the target motion determined by the target motion determination unit F112. The energy management unit F114 calculates the opening/closing timing of intake/exhaust valves (not shown), the timing of injectors (not shown) injecting the fuel, and the like at the most improved fuel consumption to achieve the engine torque determined by the vehicle motion energy setting unit F113.

### <<Selector>>

The selector F115 outputs either the output from the vehicle motion energy setting unit F113 or an output from a vehicle motion energy setting unit F310 of the backup functional unit F3. The selector F116 outputs either an output from the energy management unit F114 or an output from an energy management unit F311 of the backup functional unit F3. The output from the selector F115 and the output from the selector F116 are each a control signal for cruise control of the vehicle 100.

Specifically, the selector F115 selects the output from the vehicle motion energy setting unit F113 when no abnormality (e.g., a fault) occurs in the main arithmetic unit F1, and selects the output from the vehicle motion energy setting unit F310 of the backup functional unit F3 when an abnormality occurs in the main arithmetic unit F1. Similarly, the selector F116 selects the output from the energy management unit F114 when no abnormality occurs in the main arithmetic unit F1, and selects the output from the energy management unit F311 of the backup functional unit F3 when an abnormality occurs in the main arithmetic unit F1.

### <Safety Functional Unit>

The safety functional unit F2 recognizes the external environment of the vehicle 100 based on the output from the information acquisition unit 10 and searches the external environment of the vehicle 100 for free space. The safety functional unit F2 then generates a travel route passing through the free space. The travel route (the travel route passing through the free space) obtained by the safety functional unit F2 is used in the processing to determine the target route by the main arithmetic unit F1. For the processing by the safety functional unit F2, an algorithm based on a rule set in advance is used in place of the learning model generated by deep learning. In the safety functional unit F2, rule-based processing is performed.

In this example, the safety functional unit F2 includes an object recognition unit F201 (image system), an object recognition unit F202 (radar system), a classification unit F203, the preprocessing unit F204, the free space search unit F205, and the route generation unit F206.

The object recognition unit F201, the object recognition unit F202, the classification unit F203, and the preprocessing unit F204 belong to the recognition block B1. The free space search unit F205 and the route generation unit F206 belong to the determination block B2.

The signal processing unit 201 includes part of the object recognition unit F201 (image system), while the recognition processing unit 202 includes the rest thereof. The determination processing unit 203 (specifically, the first control IC unit 23a) includes the object recognition unit F202 (radar system), the classification unit F203, the preprocessing unit F204, the free space search unit F205, and the route generation unit F206.

### <<Object Recognition Unit (Image System)>>

The object recognition unit F201 recognizes the object included in the external environment of the vehicle 100 based on the output from the cameras 11. Thus, the object information is obtained. Specifically, the object recognition unit F201 includes an image processing unit and an image recognition unit. The image processing unit performs image processing with respect to the image data which is the output from the cameras 11. The image recognition unit recognizes the object included in the external environment of the vehicle 100 based on the image data processed by the image processing unit. The image recognition unit of the object recognition unit F201 of the object recognition unit F201 performs object recognition processing using a known pattern recognition technique without using any learning model generated by deep learning, for example. For the object recognition processing by the image recognition unit of the object recognition unit F201, another known object recognition technique (image data-based object recognition technique) may be used.

In this example, the image processing unit of the object recognition unit F201 includes a first image processing unit that performs processing based on an output from the first cameras 11a and a second image processing unit that performs processing based on an output from the second cameras 11b. The image recognition unit of the object recognition unit F201 includes a first image recognition unit that performs processing based on an output from the first image processing unit and a second image recognition unit that performs processing based on an output from the second image processing unit. In this example, the signal processing unit 201 includes the image processing unit of the object recognition unit F201, and the determination processing unit 203 includes the image recognition unit of the object recognition unit F201. Specifically, the first signal processing IC unit 21a includes the first image processing unit, and the second signal processing IC unit 21b includes the second image processing unit. The first recognition processing IC unit 22a includes the first image recognition unit, and the second recognition processing IC unit 22b includes the second image recognition unit.

### <<Object Recognition Unit (Radar System)>>

The object recognition unit F202 recognizes the object included in the external environment of the vehicle 100 based on a detection result which is the output from the radars 12. Thus, the object information is obtained. Specifically, the object recognition unit F202 performs analysis processing with respect to the detection result of the radars 12. The object recognition unit F202 performs object recognition processing using a known object recognition technique (object recognition technique based on the detection result of the radars 12) without using any learning model generated by deep learning, for example.

In this example, the object recognition unit F202 includes a first radar recognition unit that performs processing based on an output from the first radars 12a and a second radar recognition unit that performs processing based on an output from the second radars 12b. In this example, the first control IC unit 23a includes the first radar recognition unit and the second radar recognition unit.

### <<Classification Unit>>

The classification unit F203 recognizes the external environment of the vehicle 100 based on an output from the object recognition unit F201 (image system) and an output from the object recognition unit F202 (radar system). The classification unit F203 performs recognition processing (rule-based recognition processing) using an algorithm based on a rule set in advance without using any learning model generated by deep learning. For the rule-based recognition processing, a known recognition processing technique may be used. Specifically, the classification unit F203 classifies the object recognized by the object recognition unit F201 and the object recognition unit F202 into a dynamic object and a stationary object. The classification unit F203 fuses the object information obtained by the object recognition unit F201 (image system) and the object information obtained by the object recognition unit F202 (radar system) for each of a plurality of areas (e.g., four areas of front, rear, right, and left) obtained by dividing a surrounding area surrounding the vehicle 100, for example. The classification unit F203 generates classification information of the object included in each of the areas. The classification information indicates that the object corresponds to which of the dynamic object and the stationary object.

### <<Preprocessing Unit>>

The preprocessing unit F204 performs preprocessing based on an output from the classification unit F203, the output from the vehicle status detection unit F001 of the main arithmetic unit F1, the output from the position sensor 13, and the output from the external input unit 14. In the preprocessing, classified-information fusion, object behavior prediction, and self-position estimation are performed.

In the classified-information fusion, the preprocessing unit F204 fuses the classification information generated for each of a plurality of areas (e.g., four areas of front, rear, right, and left). The fused classification information is managed on a grid map (not shown) as the classification information on the surrounding area of the vehicle 100.

In the object behavior prediction, the preprocessing unit F204 detects the dynamic object included in the external environment of the vehicle 100 based on the fused classification information. The preprocessing unit F204 predicts changes in the distance between the dynamic object and the vehicle, the direction of the dynamic object with respect to the subject vehicle, and the relative speed of the dynamic object with respect to the vehicle. A result of the prediction by the preprocessing unit F204 is managed as additional information of the dynamic obj ect.

In the self-position estimation, the preprocessing unit F204 estimates the position of the subject vehicle with respect to the object (the dynamic object and the stationary object) included in the external environment of the vehicle 100 based on the position of the vehicle 100 as the output from the position sensor 13, the high-precision map information as an example output from the external input unit 14, and the status of the vehicle 100 (the vehicle speed information, the 6DoF information, and the like) as the output from the vehicle status detection unit F001.

### <<Free Space Search Unit>>

The free space search unit F205 searches the external environment of the vehicle 100 for free space based on the output from the preprocessing unit F204. The free space is an area in which no obstacles are present out of roads included in the external environment of the vehicle 100. The obstacles include a dynamic obstacle and a static obstacle. Examples of the dynamic obstacle include other vehicles and pedestrians. Examples of the static obstacle include median strips, center poles, and the like. The free space may include a space on a road shoulder allowing emergency parking and the like, for example.

Specifically, the free space search unit F205 searches for the free space that can avoid a collision with the object whose position has been estimated by the preprocessing unit F204. The free space search unit F205 searched for the free space based on a search rule set in advance, for example. The search rule may include a rule that a predetermined range around the object (e.g., a range of a few meters) is set to be an unavoidable range. The free space search unit F205 may, when the object is the dynamic object, search for the free space in consideration of the moving speed of the dynamic object.

### <<Route Generation Unit>>

The route generation unit F206 generates the travel route of the vehicle 100 based on an output from the free space search unit F205 and the output from the route search unit F106 of the main arithmetic unit F1 (wide-area route of the vehicle 100). Specifically, the route generation unit F206 generates a travel route passing through the free space obtained by the free space search unit F205. The route generation unit F206 may be configured to generate a plurality of travel routes passing through the free space, and select the one requiring the lowest route costs out of the travel routes, for example. The travel route (travel route passing through the free space) generated by the route generation unit F206 is output to the route determination unit F111 of the main arithmetic unit F1.

### <Backup Functional Unit>

The backup functional unit F3 recognizes the external environment of the vehicle 100 based on the output from the information acquisition unit 10, searches the external environment of the vehicle 100 for free space, and determines the target route of the vehicle 100 passing through the free space. The backup functional unit F3 then determines the target motion of the vehicle 100 based on the target route of the vehicle 100 and outputs a control signal based on the target motion of the vehicle 100. The control signal obtained by the backup functional unit F3 is supplied to the main arithmetic unit F1. For the processing by the backup functional unit F3, an algorithm based on a rule set in advance is used. In the backup functional unit F3, rule-based processing is performed.

In this example, the backup functional unit F3 includes a vehicle status detection unit F301, a driver operation recognition unit F302, a classification unit F303, a preprocessing unit F304, a free space search unit F305, a route generation unit F306, a critical status determination unit F307, a route determination unit F308, a target motion determination unit F309, a vehicle motion energy setting unit F310, and an energy management unit F311.

The vehicle status detection unit F301, the driver operation recognition unit F302, the classification unit F303, and the preprocessing unit F304 belong to the recognition block B1. The free space search unit F305, the route generation unit F306, the critical status determination unit F307, the route determination unit F308, and the target motion determination unit F309 belong to the determination block B2. The vehicle motion energy setting unit F310 and the energy management unit F311 belong to the operation block B3.

In this example, the backup processing unit 204 (specifically, the second control IC unit 23b) includes a vehicle status detection unit F301, a driver operation recognition unit F302, a classification unit F303, a preprocessing unit F304, a free space search unit F305, a route generation unit F306, a critical status determination unit F307, a route determination unit F308, a target motion determination unit F309, a vehicle motion energy setting unit F310, and an energy management unit F311.

### «Vehicle Status Detection Unit and Driver Operation Recognition Unit»

The functions of the vehicle status detection unit F301 and the driver operation recognition unit F302 are the same as the respective functions of the vehicle status detection unit F001 and the driver operation recognition unit F002 of the main arithmetic unit F1.

### <<Classification Unit, Preprocessing Unit, Free Space Search Unit, and Route Generation Unit>>

The functions of the classification unit F303, the preprocessing unit F304, the free space search unit F305, and the route generation unit F306 are the same as the respective functions of the classification unit F203, the preprocessing unit F204, the free space search unit F205, and the route generation unit F206 of the safety functional unit F2.

In the example in FIG. 6, the classification unit F303 performs processing based on the output from the object recognition unit F201 (image system) and the output from the object recognition unit F202 (radar system) of the safety functional unit F2. The backup functional unit F3 may include an object recognition unit (image system) and an object recognition unit (radar system) which is the same as the object recognition unit F201 (image system) and the object recognition unit F202 (radar system) of the safety functional unit F2, respectively. In this case, the classification unit F303 may perform the processing based on an output from the object recognition unit (the image system) and an output from the object recognition unit (the radar system) of the backup functional unit F3.

### <<Route Determination Unit>>

The route determination unit F308 determines the target route of the vehicle 100 based on an output from the driver operation recognition unit F302 and an output from the route generation unit F306 (travel route passing through the free space). The route determination unit F308 selects any one out of a plurality of travel routes generated by the route generation unit F306 as the target route, for example. The route determination unit F308 may adjust the selected target route in accordance with the output from the driver operation recognition unit F302.

### <Target Motion Determination Unit>

The target motion determination unit F309 determines the target motion of the vehicle 100 based on an output from the critical status determination unit F307 (target route) and an output from the route determination unit F308. Unlike the target motion determination unit F112 of the main arithmetic unit F1, the target motion determination unit F309 determines the target motion of the vehicle 100 using an algorithm based on a rule set in advance without using any learning model generated by deep learning. The target motion determination unit F309 may, upon input of the target route generated by the critical status determination unit F307 (the target route for avoiding critical situations), determine the target motion of the vehicle 100 based on the target route generated by the critical status determination unit F307, for example. The target motion determination unit F309 may, when the target route generated by the critical status determination unit F307 is not input (the vehicle 100 is not in a critical status), determine the target motion of the vehicle 100 based on the target route generated by the route determination unit F308.

### «Vehicle Motion Energy Setting Unit»

Like the vehicle motion energy setting unit F113 of the main arithmetic unit F1, the vehicle motion energy setting unit F310 calculates the driving torque required for the drive actuator, the steering torque required for the steering actuator, and the braking torque required for the braking actuator based on an output from the target motion determination unit F309. Each torque calculated by the vehicle motion energy setting unit F310 are output to the selector F 115 of the main arithmetic unit F 1.

### <Energy Management Unit>

The energy management unit F311 calculates the control amount of the actuator AC based on the output from the vehicle motion energy setting unit F310. Specifically, the energy management unit F311 calculates the control amount of the actuator AC at the highest energy efficiency to achieve the target motion determined by the target motion determination unit F309. Unlike the energy management unit F114 of the main arithmetic unit F1, the energy management unit F311 calculates the control amount of the actuator AC using an algorithm based on a rule set in advance without using any learning model generated by deep learning. The control amount calculated by the energy management unit F311 is output to the selector F116 of the main arithmetic unit F 1.

### [Operation of Control Unit]

The control unit 20 performs a first operation, a second operation, and a third operation. The vehicle control system 1 is provided with a first signal system including a plurality of first cameras 11a, and a second signal system including a plurality of second cameras 11b. In this example, the control unit 20 performs the first operation when both of the first and second signal systems have no abnormality. The control unit 20 performs the second operation when the second signal system between the first and second signal systems has an abnormality. The control unit 20 performs the third operation when the first signal system between the first and second signal systems has an abnormality.

### <First Operation>

During the first operation, the control unit 20 outputs a control signal (signal for cruise control of the vehicle 100) based on both of the output from the first cameras 11a and the output from the second cameras 11b. In this example, the control unit 20 outputs, during the first operation, the control signal based on both of the result of the recognition processing by the first recognition processing IC unit 22a and the result of the recognition processing by the second recognition processing IC unit 22b.

Specifically, during the first operation, the first signal processing IC unit 21a processes the output from the first cameras 11a, and the first recognition processing IC unit 22a processes the output from the first signal processing IC unit 21a. The second signal processing IC unit 21b processes the output from the second cameras 11b, and the second recognition processing IC unit 22b processes the output from the second signal processing IC unit 21b. The second recognition processing IC unit 22b outputs the result of the recognition processing to the first recognition processing IC unit 22a. The first recognition processing IC unit 22a fuses the result of the recognition processing by the first recognition processing IC unit 22a and the result of the recognition processing by the second recognition processing IC unit 22b, and outputs a recognition result obtained by this fusing to the first control IC unit 23a. The first control IC unit 23a outputs the control signal based on the output from the first recognition processing IC unit 22a.

### <Second Operation>

During the second operation, the control unit 20 outputs the control signal based on the output from the first cameras 11a. In this example, the control unit 20 outputs, during the second operation, the control signal based on the result of the recognition processing by the first recognition processing IC unit 22a.

Specifically, during the second operation, the first signal processing IC unit 21a processes the output from the first cameras 11a, and the first recognition processing IC unit 22a processes the output from the first signal processing IC unit 21a. The first recognition processing IC unit 22a outputs the result of the recognition processing by the first recognition processing IC unit 22a to the first control IC unit 23a. The first control IC unit 23a outputs the control signal based on the result of the recognition processing by the first recognition processing IC unit 22a.

### <Third Operation>

During the third operation, the control unit 20 outputs the control signal based on the output from the second cameras 11b. In this example, the control unit 20 outputs, during the third operation, the control signal based on the result of the recognition processing by the second recognition processing IC unit 22b.

Specifically, during the third operation, the second signal processing IC unit 21b processes the output from the second cameras 11b, and the second recognition processing IC unit 22b processes the output from the second signal processing IC unit 21b. The second recognition processing IC unit 22b outputs the result of the recognition processing to the first recognition processing IC unit 22a. The first recognition processing IC unit 22a outputs the result of the recognition processing by the second recognition processing IC unit 22b to the first control IC unit 23a. The first control IC unit 23a outputs the control signal based on the result of the recognition processing by the first recognition processing IC unit 22a.

### [Advantages of Embodiment]

As described above, the vehicle 100 has two combinations of the cameras 11 provided in the vehicle 100 so as to surround the vehicle 100. Provision of the first cameras 11a so as to surround the vehicle 100 allows an environment spread around the vehicle 100 (the external environment of the vehicle 100) to be monitored based on the output from the first cameras 11a. Similarly, provision of the second cameras 11b so as to surround the vehicle 100 allows the external environment of the vehicle 100 to be monitored based on the output from the second cameras 11b. As described above, the external environment of the vehicle 100 may be monitored based on at least either one of the output from the first cameras 11a or the output from the second cameras 11b. Accordingly, even when either one of the first signal system including the first cameras 11a or the second signal system including the second cameras 11b has an abnormality, it is possible to continue the cruise control of the vehicle 100 based on the output from the cameras 11 in the other signal system by performing the second or third operation. This allows improvement in continuity of cruise control of the vehicle 100.

This configuration allows automatic switching among the first, second, and third operations according to the presence or absence of abnormality in the first and second signal systems. Accordingly, when either one of the first or second signal system has an abnormality, the second or third operation may be automatically continued. This allows automatic continuation of the cruise control of the vehicle 100.

In this example, the first cameras 11a include a first front camera 111a, a first diagonally backward right camera 112a, and a first diagonally backward left camera 113a. The second cameras 11b include a second front camera 111b, a second diagonally backward right camera 112b, and a second diagonally backward left camera 113b. This configuration allows the cruise control of the vehicle 100 to be continued based on at least an area in front of the vehicle 100, an area diagonally backward right of the vehicle 100, and an area diagonally backward left of the vehicle 100 in the environment spread around the vehicle 100 (external environment of the vehicle 100). Accordingly, even when either one of the first or second signal system has an abnormality, this allows continuous cruise control based on the area in front of the vehicle 100 (e.g., control for maintaining an appropriate distance from other vehicles traveling in front of the subject vehicle) and control based on the area diagonally backward right of the vehicle 100 and the area diagonally backward left of the vehicle 100 (e.g., control for sensing critical situations when the subject vehicle performs lane changing).

The recognition processing by both of the first recognition processing IC unit 22a and the second recognition processing IC unit 22b allows improvement of recognition accuracy, compared with recognition processing by either one of the first recognition processing IC unit 22a or the second recognition processing IC unit 22b.

### <Variation of Embodiment>

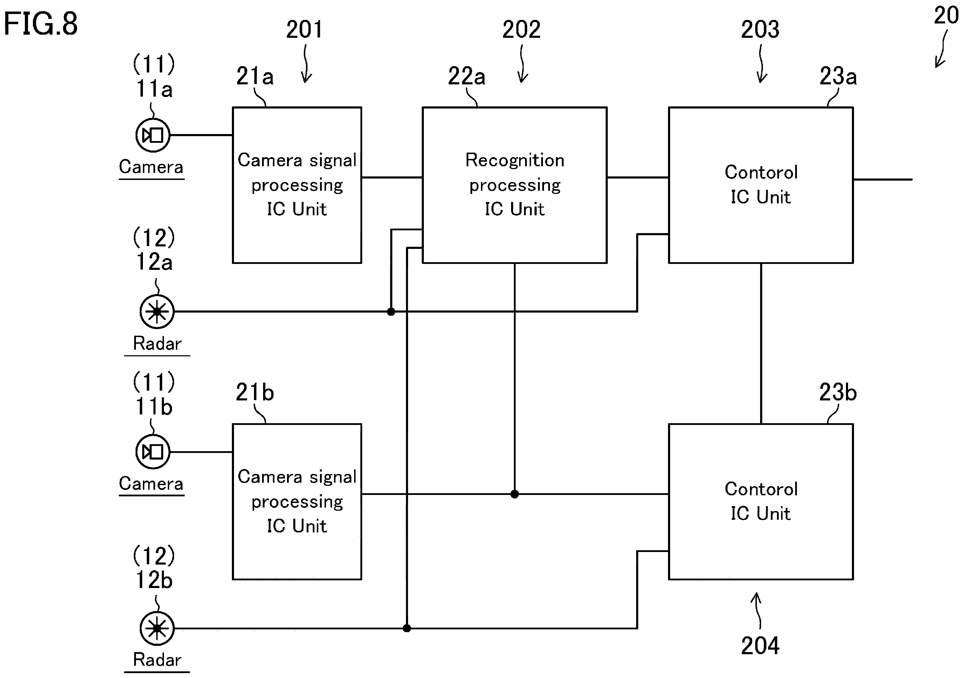

As shown in FIG. 8, the recognition processing unit 202 may be constituted as a single recognition processing IC unit (first recognition processing IC unit 22a in the example of FIG. 8). In this example, the output from the second signal processing IC unit 21b is supplied to the first recognition processing IC unit 22a. The first recognition processing IC unit 22a performs recognition processing based on the output from the first signal processing IC unit 21a and the output from the second signal processing IC unit 21b.

Similarly, the signal processing unit 201 may be constituted as a single signal processing IC unit (e.g., the first signal processing IC unit 21a).

### (Other Embodiments)

The above description is made based on the case in which two combinations of cameras 11 are provided in the vehicle 100 so as to surround the vehicle 100 as an example, but is not limited by this example. For example, three combinations of cameras 11 may be provided in the vehicle 100 so as to surround the vehicle 100. Similarly, the above description is made based on the case in which two combinations of the radars 12 are provided in the vehicle 100 so as to surround the vehicle 100 as an example, but is not limited by this example. For example, three combinations of radars 12 may be provided in the vehicle 100 so as to surround the vehicle 100.

The foregoing embodiments may be performed in combination as appropriate. The foregoing embodiments are merely exemplary ones in nature, and are not intended to limit the scope, applications, or use of the present invention. The scope of protection for the invention shall be determined by the appended claims. Nevertheless, the description and drawings shall be used to interpret the claims.

## Claims

1. A vehicle control system (1) for controlling a vehicle (100), the system comprising:
a plurality of first cameras (11a) disposed in the vehicle (100) so as to surround the vehicle (100), the plurality of first cameras (11a) include a first front camera (111a) that images an area in front of the vehicle (100), a first diagonally backward right camera (112a) that images an area diagonally backward right of the vehicle (100), and a first diagonally backward left camera (113a) that images an area diagonally backward left of the vehicle (100);
a plurality of second cameras (11b) disposed in the vehicle (100) so as to surround the vehicle (100), the plurality of second cameras (11b) include a second front camera (111b) that images an area in front of the vehicle (100), a second diagonally backward right camera (112b) that images an area diagonally backward right of the vehicle (100), and a second diagonally backward left camera (113b) that images an area diagonally backward left of the vehicle (100);
a plurality of first radars (12a) provided in the vehicle (100) so as to surround the vehicle (100),
a plurality of second radars (12b) provided in the vehicle (100) so as to surround the vehicle (100), and
a control unit (20) that includes: a first recognition processing IC unit (22a) that performs recognition processing for recognizing an external environment of the vehicle (100) based on an output from the plurality of first cameras (11a) and an output from the plurality of first radars (12a); and a second recognition processing IC unit (22b) that performs the recognition processing based on the output of the plurality of second cameras (11b) and an output from the plurality of second radars (12b), wherein
a combination of monitoring areas of the plurality of first cameras (11a) and the plurality of first radars (12a) surrounds an entire circumference of the vehicle (100),
a combination of monitoring areas of the plurality of second cameras (11b) and the plurality of second radars (12b) surrounds the entire circumference of the vehicle (100),
the control unit (20) is adapted to perform a first operation of outputting a control signal for cruise control of the vehicle (100) based on both of a result of the recognition processing by the first recognition processing IC unit (22a) and a result of the recognition processing by the second recognition processing IC unit (22b),
a second operation of outputting the control signal based on the result of the recognition processing by the first recognition processing IC unit (22a), and
a the third operation of outputting the control signal based on the result of the recognition processing by the second recognition processing IC unit (22b).

2. The vehicle control system (1) of claim 1, wherein
the control unit (20) performs:
the first operation when a first signal system including the plurality of first cameras (11a) and a second signal system including the plurality of second cameras (11b) both do not have an abnormality,
the second operation when the second signal system between the first and second signal systems has an abnormality, and
the third operation when the first signal system between the first and second signal systems has an abnormality.

## Patentansprüche

1. Fahrzeugsteuerungssystem (1) zum Steuern eines Fahrzeugs (100), wobei das System aufweist:
eine Vielzahl von ersten Kameras (11a), die in dem Fahrzeug (100) so angeordnet sind, dass sie das Fahrzeug (100) umgeben, wobei die Vielzahl von ersten Kameras (11a) eine erste Frontkamera (111a), die einen Bereich vor dem Fahrzeug (100) abbildet, eine erste diagonal rückwärts gerichtete rechte Kamera (112a), die einen Bereich diagonal rückwärts rechts von dem Fahrzeug (100) abbildet, und eine erste diagonal rückwärts gerichtete linke Kamera (113a), die einen Bereich diagonal rückwärts links von dem Fahrzeug (100) abbildet, umfasst;
eine Vielzahl von zweiten Kameras (11b), die in dem Fahrzeug (100) so angeordnet sind, dass sie das Fahrzeug (100) umgeben, wobei die Vielzahl von zweiten Kameras (11b) eine zweite Frontkamera (1 1 1b), die einen Bereich vor dem Fahrzeug (100) abbildet, eine zweite diagonal rückwärts gerichtete rechte Kamera (112b), die einen Bereich diagonal rückwärts rechts von dem Fahrzeug (100) abbildet, und eine zweite diagonal rückwärts gerichtete linke Kamera (113b), die einen Bereich diagonal rückwärts links von dem Fahrzeug (100) abbildet, umfasst
eine Vielzahl von ersten Radaren (12a), die in dem Fahrzeug (100) so vorgesehen sind, dass sie das Fahrzeug (100) umgeben,
eine Vielzahl von zweiten Radaren (12b), die in dem Fahrzeug (100) so vorgesehen sind, dass sie das Fahrzeug (100) umgeben, und
eine Steuerungseinheit (20), die aufweist: eine erste Erkennungsverarbeitungs-IC-Einheit (22a), die eine Erkennungsverarbeitung zum Erkennen einer Außenumgebung des Fahrzeugs (100) basierend auf einem Ausgangssignal aus der Vielzahl von ersten Kameras (11a) und einem Ausgangssignal aus der Vielzahl von ersten Radaren (12a) durchführt, und eine zweite Erkennungsverarbeitungs-IC-Einheit (22b), die die Erkennungsverarbeitung basierend auf einem Ausgangssignal aus der Vielzahl von zweiten Kameras (11b) und eines Ausgangssignals aus der Vielzahl von zweiten Radaren (12b) durchführt, wobei
eine Kombination von Überwachungsbereichen der Vielzahl von ersten Kameras (11a) und der Vielzahl von ersten Radaren (12a) einen Gesamtumfang des Fahrzeugs (100) umgibt,
eine Kombination von Überwachungsbereichen der Vielzahl von zweiten Kameras (11b) und der Vielzahl von zweiten Radaren (12b) den Gesamtumfang des Fahrzeugs (100) umgibt,
die Steuerungseinheit (20) ausgelegt ist zur Durchführung eines ersten Vorgangs des Ausgebens eines Steuersignals für die Geschwindigkeitsregelung des Fahrzeugs (100) auf Grundlage sowohl eines Ergebnisses der Erkennungsverarbeitung durch die erste Erkennungsverarbeitungs-IC-Einheit (22a) als auch eines Ergebnisses der Erkennungsverarbeitung durch die zweite Erkennungsverarbeitungs-IC-Einheit (22b) durchzuführen,
eines zweiten Vorgangs des Ausgebens des Steuersignals auf Grundlage des Ergebnisses der Erkennungsverarbeitung durch die erste Erkennungsverarbeitungs-IC-Einheit (22a), und
einen dritten Vorgang des Ausgebens des Steuersignals auf Grundlage des Ergebnisses der Erkennungsverarbeitung durch die zweite Erkennungsverarbeitungs-IC-Einheit (22b).

2. Fahrzeugsteuerungssystem (1) nach Anspruch 1, wobei
die Steuerungseinheit (20) durchführt:
den ersten Vorgang, wenn sowohl ein erstes Signalsystem, das Vielzahl von ersten ersten Kameras (11a) enthält, als auch ein zweites Signalsystem, das die Vielzahl von zweiten Kameras (11b) enthält, keine Anomalie aufweisen,
den zweiten Vorgang, wenn das zweite Signalsystem zwischen dem ersten und dem zweiten Signalsystem eine Anomalie hat, und
einen dritten Vorgang, wenn das erste Signalsystem zwischen dem ersten und dem zweiten Signalsystem eine Anomalie hat.

## Revendications

1. Système (1) de commande de véhicule permettant de commander un véhicule (100), le système comprenant :
une pluralité de premières caméras (11a) disposées dans le véhicule (100) de façon à entourer le véhicule (100), la pluralité de premières caméras (11a) comportant une première caméra avant (111a) destinée à capturer des images d'une zone devant le véhicule (100), une première caméra droite diagonalement vers l'arrière (112a) destinée à capturer des images d'une zone à droite diagonalement vers l'arrière du véhicule (100), et une première caméra gauche diagonalement vers l'arrière (113a) destinée à capturer des images d'une zone à gauche diagonalement vers l'arrière du véhicule (100) ;
une pluralité de secondes caméras (11b) disposées dans le véhicule (100) de façon à entourer le véhicule (100), la pluralité de secondes caméras (11b) comportant une seconde caméra avant (111b) destinée à capturer des images d'une zone devant le véhicule (100), une seconde caméra droite diagonalement vers l'arrière (112b) destinée à capturer des images d'une zone à droite diagonalement vers l'arrière du véhicule (100), et une seconde caméra gauche diagonalement vers l'arrière (113b) destinée à capturer des images d'une zone à gauche diagonalement vers l'arrière du véhicule (100) ;
une pluralité de premiers radars (12a) disposés dans le véhicule (100) de façon à entourer le véhicule (100) ;
une pluralité de seconds radars (12b) disposés dans le véhicule (100) de façon à entourer le véhicule (100) ; et
une unité de commande (20) comprenant : une première unité CI (22a) de traitement de reconnaissance destinée à effectuer un traitement de reconnaissance permettant de reconnaître un environnement extérieur du véhicule (100) sur la base d'une sortie en provenance de la pluralité de premières caméras (11a) et d'une sortie en provenance de la pluralité de premiers radars (12a) ; et une seconde unité CI (22b) de traitement de reconnaissance destinée à effectuer le traitement de reconnaissance sur la base d'une sortie en provenance de la pluralité de secondes caméras (11b) et d'une sortie en provenance de la pluralité de seconds radars (12b), dans lequel
une combinaison de zones de surveillance de la pluralité de premières caméras (11a) et de la pluralité de premiers radars (12a) entoure l'ensemble d'une circonférence du véhicule (100),
une combinaison de zones de surveillance de la pluralité de secondes caméras (11b) et de la pluralité de seconds radars (12b) entoure l'ensemble de la circonférence du véhicule (100),
l'unité de commande (20) est adaptée à effectuer une première opération destinée à délivrer un signal de commande permettant la régulation de la vitesse du véhicule (100) sur la base à la fois d'un résultat du traitement de reconnaissance à l'aide de la première unité CI (22a) de traitement de reconnaissance et d'un résultat du traitement de reconnaissance à l'aide de la seconde unité CI (22b) de traitement de reconnaissance,
une deuxième opération destinée à délivrer le signal de commande sur la base du résultat du traitement de reconnaissance à l'aide de la première unité CI (22a) de traitement de reconnaissance, et
une troisième opération destinée à délivrer le signal de commande sur la base du résultat du traitement de reconnaissance à l'aide de la seconde unité CI (22b) de traitement de reconnaissance.

2. Le système (1) de commande de véhicule de la revendication 1, dans lequel
l'unité de commande (20) effectue :
la première opération lorsqu'un premier système de signaux comprenant la pluralité de premières caméras (11a), ainsi qu'un second système de signaux comprenant la pluralité de secondes caméras (11b), ne présentent pas d'anomalie,
la deuxième opération lorsque le second système de signaux, parmi les premier et second systèmes de signaux, présente une anomalie, et
la troisième opération lorsque le premier système de signaux, parmi les premier et second systèmes de signaux, présente une anomalie.
